# EUROPEAN PATENT SPECIFICATION

(11) **EP 3 104 828 B1**
(45) Date of publication and mention of the grant of the patent: **06.05.2020**
(21) Application number: 15748590.5
(22) Date of filing: 09.02.2015
(51) Int. Cl.: A61J 15/00, A61J 1/10

(54) **METHOD AND APPARATUS FOR A SQUEEZABLE FOOD CONTAINER HAVING A DIRECT FEEDING TUBE CONNECTOR**
VERFAHREN UND VORRICHTUNG FÜR EINEN AUSPRESSBAREN LEBENSMITTELBEHÄLTER MIT DIREKTEM ERNÄHRUNGSSONDENVERBINDER
PROCÉDÉ ET APPAREIL POUR RÉCIPIENT ALIMENTAIRE COMPRESSIBLE POURVU D'UN CONNECTEUR DE TUBE D'ALIMENTATION DIRECTE

(30) Priority: 13.02.2014 US 201414180011
(43) Date of publication of application: 21.12.2016
(73) Proprietor: Medline Industries, Inc., Mundelein, IL 60060 (US)
(72) Inventor: GERWIRTZ, Gail, Northbrook, Illinois 60062 (US); STEVENS, Luke, Long Grove, Illinois 60047 (US); LOWKIS, Paulina, Barrington, Illinois 60010 (US)
(74) Representative: Optimus Patents Limited
(86) International application number: PCT/US2015/015001
(87) International publication number: WO 2015/123134

(56) References cited:
- WO-A1-2012/058032
- DE-A1- 19 807 131
- US-A- 4 259 952
- US-A- 4 259 952
- US-A- 4 608 043
- US-A- 4 608 043
- US-A- 5 984 912
- US-A1- 2007 108 158
- US-A1- 2010 147 885
- US-A1- 2012 310 177
- US-A1- 2013 197 465

## Description

### Technical Field

These teachings relate generally to enteral feeding practices.

### Background

Enteral feeding practices are known in the art. Enteral feeding refers to introducing food (and/or beverages) directly into the digestive system (i.e., the stomach or small intestine) of the consumer. Such content is typically placed in the digestive system via a feeding tube. The feeding tube itself may be introduced into the digestive system via the consumer's throat or through an opening in their abdomen.

By one approach the feeding tube connects to an open-top funnel or the like. An attendant then pours the food/beverage into that open-top mechanism and gravity directs the food/beverage through the feeding tube and directly into the consumer's digestive system. By another approach a relatively large bag, bottle, or other container (containing, for example, about 1,000 milliliters) of the desired food/beverage is hung on an IV pole and a tube provides the contents of that bag to an electric pump that then delivers a metered flow of the food/beverage directly into the consumer's digestive system via a delivery tube. Alternately, the tube could provide the product by means of gravity flow in the absence of a pump.

The foregoing approaches are generally suitable for the stated function of delivering digestible materials directly to a consumer's digestive tract. That said, however, existing approaches do not suit all needs and wishes of all users and all application settings. As one general example in these regards, existing approaches have a very institutional look-and-feel regardless of whether these materials are employed in a hospital, home, school setting, and so forth. Prior art approaches also tend to emphasize, at every turn and opportunity, that the person receiving this food is partaking of a "meal" via anything other than an ordinary dining experience. Typical examples of enteral feeding arrangements include US2013/310177 A1 with elaborate intervening contraptions located between the container of food and a feeding tube and US2010/147885 A1 with an arrangement that directly attaches to a recipient's mouth.

The foregoing approaches may also be very inconvenient to the user, especially in a mobile or ambulatory setting. Such approaches also typically require a portable electric pump and/or tubing mechanisms that are inconvenient to carry and which can further serve to draw unwanted and undo attention to the user's condition.

### Brief Description of the Drawings

The above needs are at least partially met through provision of the method and apparatus for a squeezable food container having a direct feeding tube connector described in the following detailed description, particularly when studied in conjunction with the drawings, wherein:
FIG. 1 comprises a flow diagram as configured in accordance with various embodiments of these teachings;
FIG. 2 comprises a front-elevational view as configured in accordance with various embodiments of these teachings;
FIG. 3 comprises a front-elevational view as configured in accordance with various embodiments of these teachings;
FIG. 4 comprises a side-elevational detail view as configured in accordance with various embodiments of these teachings;
FIG. 5 comprises a side-elevational view as configured in accordance with various embodiments of these teachings;
FIG. 6 comprises a front-elevational view as configured in accordance with various embodiments of these teachings; and
FIG. 7 comprises a front-elevational view as configured in accordance with various embodiments of the invention.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### Detailed Description

Generally speaking, pursuant to these various embodiments, a sealed and squeezable container of pre-filled squeezable food that is sized no larger than a single meal serves as a prepackaged, one-time-use, meal-appropriate enteral food dispenser. By one approach the squeezable container has a dispensing port comprising a direct feeding tube connector.

So configured, the pre-filled container contains a considerably smaller amount of food than typical prior art pre-filled containers. This sizing, however, well serves the purpose of providing single-meal servings and hence better accommodating at least some of the actions, behaviors, and accoutrements of partaking of an ordinary dining experience rather than merely being impersonally-infused with biological fuel. By one approach, if desired, the pre-filled container contains less than a full-sized single meal. For example, the container may be sized no larger than about one half of a single meal.

As noted above, this enteral food dispenser is squeezable and the food contained therein is squeezable as well. So configured the consumer (or their guardian, aide, or the like) squeezes the container to remove the food from the container and thereby introduce the food via a feeding tube into the consumer's digestive tract. This approach, too, differs greatly from typical prior art practice but again offers an approach that can better accord with more ordinary eating practices than those prior art behaviors. In many cases, then, it can be acceptable or even useful for the squeezable container to lack a hanging interface as the delivery approach eschews the need to hang the container from, for example, an IV pole.

The aforementioned direct feeding tube connector can assume any of a variety of form factors. Examples in these regards include but are not limited to threaded interfaces, friction-fit interfaces, snap-fit interfaces, and so forth (though needles and the like are excluded). By one approach the direct feeding tube connector observes the technical requirements of an available standard (legal or voluntarily-observed) that specifies the size, shape, and connection for feeding tube connectors to the exclusion of connectors for other kinds of tubes to thereby help assure that the direct feeding tube connector compatibly connects to nothing but a feeding tube.

By one approach a flow limiter serves to limit a flow rate of the squeezable food from the squeezable container through the direct feeding tube connector. Such a flow limiter can also serve, for example, to prevent the food from spilling from or otherwise exiting the container when inadvertently tipped or the like.

By another approach, in lieu of the foregoing or in combination therewith, a one-way valve can be disposed to prevent material (such as gas or other contents of the consumer's digestive system) from entering the squeezable container via the direct feeding tube connector. Such a one-way value may also serve in part as the aforementioned flow limiter to thereby also prevent the food from spilling from or otherwise exiting the container when inadvertently tipped or the like by requiring a degree of pressure within the container to open the valve in the desired direction of flow.

Such a squeezable container can better serve an application setting that more closely accords with the behaviors, preparations, and appearances of an ordinary meal. By one approach the exterior surface of the container can include graphic content that furthers this impression/experience. That graphic content can comprise, for example, one or more illustrations of recognizable food items that comprise the squeezable food (such as raw or prepared vegetables, fruits, grain and meat products, dairy products, and so forth) and/or textual description of such food items. Such information can better inform the selection of particular containers/foods for a given meal in contravention of more ordinary practices in these regards. This kind of visual cue can also help many consumers better achieve a sense of consuming a more traditional meal than typical prior art practices.

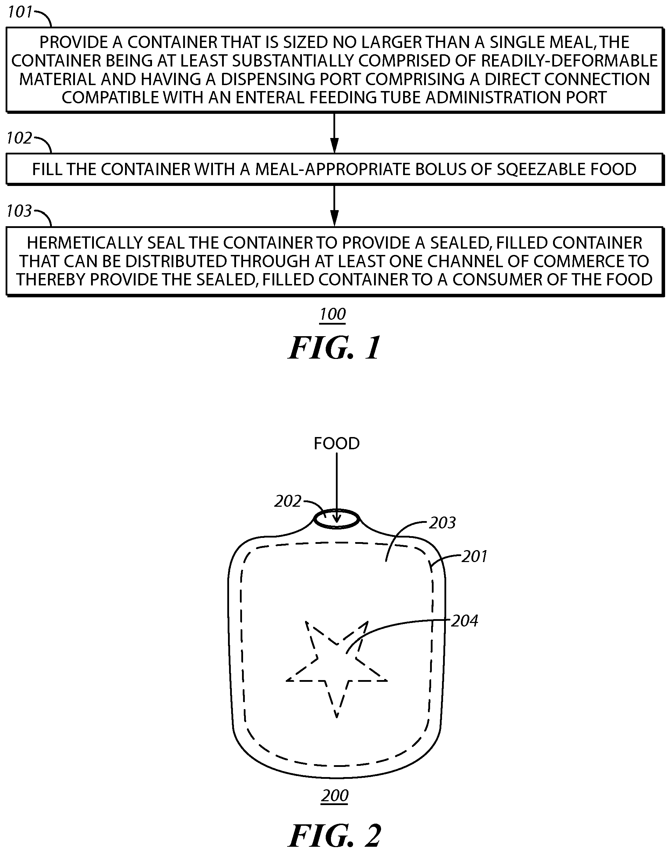

These and other benefits may become clearer upon making a thorough review and study of the following detailed description. Referring now to the drawings, and in particular to FIG. 1, an illustrative process 100 that is compatible with many of these teachings will now be presented.

At block 101 this process 100 provides a container 201 (see FIG. 2) that is sized no larger than about a single meal. By one approach this can comprise a single meal for an average adult human having average nutritional requirements. By another approach this can comprise a single meal for an average human minor having average nutritional requirements. For many application settings it will serve for this container 201 to be therefore sized no larger than about 250 milliliters which is a size considerably smaller than typical prior art pre-packaged enteral feeding containers. This size well accords with the idea of using this container during the course of only a single meal for the consumer.

This container 201 is comprised of a readily-deformable material. So configured the container 201 can be readily squeezed (when filled) by the average human adult or minor (at least over the age of, say, three years old) to thereby cause the contents of the container 201 to be displaced therefrom in an orderly manner. A variety of materials will serve in these regards including various plastic films and metallic foils. These teachings will also readily accommodate any of a variety of laminates as well.

Generally speaking the interior surfaces of the container 201 should be well suited to the purpose of longer-term safe contact with food without tainting such food with any materials-based taste or scent. Such materials and their corresponding manner of use in these regards comprises a well-understood area of endeavor and accordingly no further description will be provided here for the sake of brevity.

For many purposes it will suffice for the container 201 to have a bag-like form factor. In particular, the periphery of the container 201 can comprise a hermetically-sealed periphery save for an opening 202 through which food can be introduced into the interior 203 of the container 201. Such a seal can be created in any of a variety of ways including but not limited to the use of adhesives, applied heat, sonic welding, and so forth. These teachings will accommodate other form factors, such as a syringe-like form factor, if desired.

By one approach the exterior of the container 201 can include graphic content 204 (schematically represented here by a star presented in phantom lines). This graphic content can include, for example, one or more illustrations of at least one food item contained by the container 201 and/or a textual description of such a food item. Such an illustration can vary as desired and might comprise, for example, a photographic image or an artist's rendition of an actual food item (either in a raw or prepared state or as part of a serving suggestion). Similarly, the content of the text can vary as desired. To the extent that the container 201 includes text the text can present information in as many languages as may be desired.

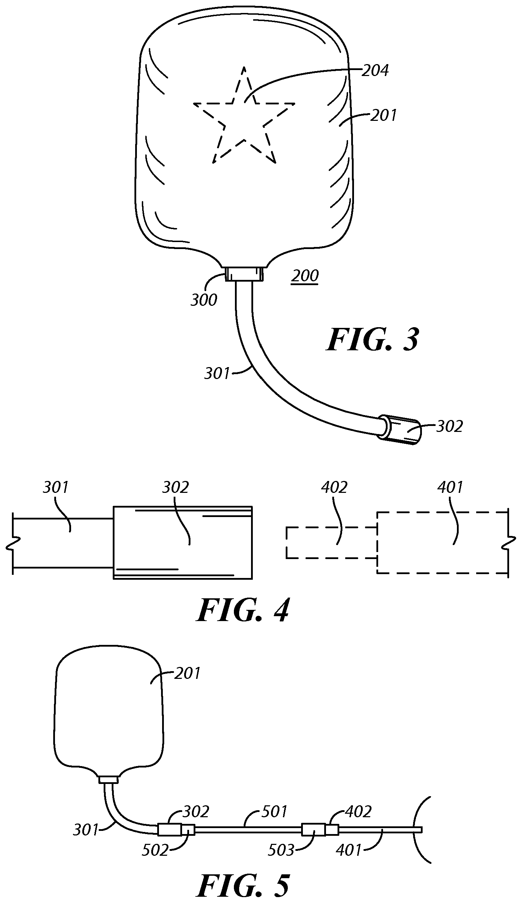

Referring momentarily to FIG. 3, this prepackaged, one-time use, meal-appropriate, enteral food dispenser 200 can further include a dispensing port 300 that fits in (or around as desired) the aforementioned container opening 202. This connection between the dispensing port 300 and the container 201 can comprise a hermitic seal to thereby help ensure that the food contents of the container 201 are hermetically sealed within the container.

By one approach this dispensing port 300 includes a flow limiter to limit a flow rate of the squeezable food from the squeezable container. Various approaches are known in the art in these regards and include but are not limited to reduced-diameter orifices, membranes, and so forth. By one approach, this flow limiter is configured to require at least some threshold level of pressure being applied to the squeezable food in order to open and permit the food to pass through the flow limiter.

By another approach, in lieu of the foregoing or in combination therewith, this dispensing port 300 can include a one-way valve disposed to prevent material from entering the squeezable container via the dispensing port 300. During use, for example, such a one-way valve can prevent a backflow of the consumer's digestive fluids and solids, gases, and so forth. Again, various known one-way valves can be so employed as desired.

In this illustrative example the dispensing port 300 includes a short tube 301 of flexible food-safe material (such as but not limited to silicon) (from perhaps 1 centimeter to about 10 centimeters in length) that terminates in a direct feeding tube connector 302. (These teachings will readily accommodate other approaches in these regards. For example, dispensing port 300 may lack the short tube 301.) Being a "direct feeding tube connector," this connector is configured, shaped, and sized to connect securely (albeit removably and temporarily) to a feeding tube with a water-tight seal.

"Feeding tubes" are known in the art and constitute a flexible tube (often comprised of silicon) that is designed, packaged, and distributed for exclusive use in enteral feeding by having one end of the tube placed directly within the consumer's digestive tract (i.e., the stomach or the small intestine) via that person's nose or mouth (by one approach) or via an opening formed in and through the user's skin (by another approach).

Referring to FIG. 4, the direct feeding tube connector 302 provides a leakproof compatible connection to a corresponding feeding tube 401. In many cases the feeding tube 401 will itself have a connector 402 that serves as an enteral feeding tube administration port. In such a case the direct feeding tube connector 302 serves to compatibly connect to that connector 402.

In some cases the technical specifications for such a connection may be stipulated by a legal, industrial, or de facto standard. Such a standard may specify, for example, a connector that is to be exclusively used for feeding tube connections to thereby avoid the possibility of inadvertently connecting a source of enteral feeding content to anything other than a feeding tube. The present teachings will accommodate a variety of approaches in these regards including direct feeding tube connectors employing one or more of a threaded interface, a friction-fit interface, a snap-fit interface, a hooks-and-loops interface, and/or a magnetic interface to compatibly engage the connector with a feeding tube.

Referring momentarily to FIG. 5, feeding tube extension sets are also known in the art and typically comprise an extension tube 501 having a first connector 502 that connects to the source of food and a second connector 503 at the opposing end of the extension tube 501 that connects to the aforementioned feeding tube connector 402. The first connector 502 is a functional equivalent to the connector 402 on the feeding tube 401 to ensure that the aforementioned direct feeding tube connector 302 compatibly connects thereto. Accordingly, it will be understood that it does not diminish or alter the above-mentioned stipulation that the direct feeding tube connector 302 directly connects to a feeding tube by also acknowledging that the direct feeding tube connector 302 will also connect to a feeding tube extension that employs the same style of connector as the feeding tube.

Referring again to FIGS. 1 and 2, at block 102 this process 100 provides for filling the container 201 with a meal-appropriate (i.e., in volume and nutritional content) bolus of squeezable food. By one approach this food is introduced via the aforementioned opening 202 prior to emplacing the aforementioned dispensing port 300. As used herein the word "food" will be understood to refer to essentially any safely digestible substance and can therefore range from a liquid such as water or other beverage to any of a variety of semisolid to solid, raw or processed consumables.

As used herein the word "squeezable" as applied to food will be understood to refer to food that is in a liquid or slurry form ranging from the consistency of water to non-chunky applesauce or the like. Accordingly, "squeezable food" includes liquids such as water or other beverages, liquefied food solids, and formula. As used herein, "liquefied" refers to a state where the food is sufficiently liquid to pass unimpeded through a feeding tube.

Forming squeezable food products and introducing such material in containers comprises a generally well understood area of prior art endeavor and therefore requires no further description here.

At block 103 this process 100 provides for sealing the container 203 (for example, by placing and sealing-in-place the dispensing port 300) to provide a sealed, filled container that can be distributed through at least one channel of commerce to thereby provide the sealed, filled container to a consumer of the food contained therein. As indicated earlier this seal can comprise a hermetic seal as accords with prior art food-handling techniques and methodologies.

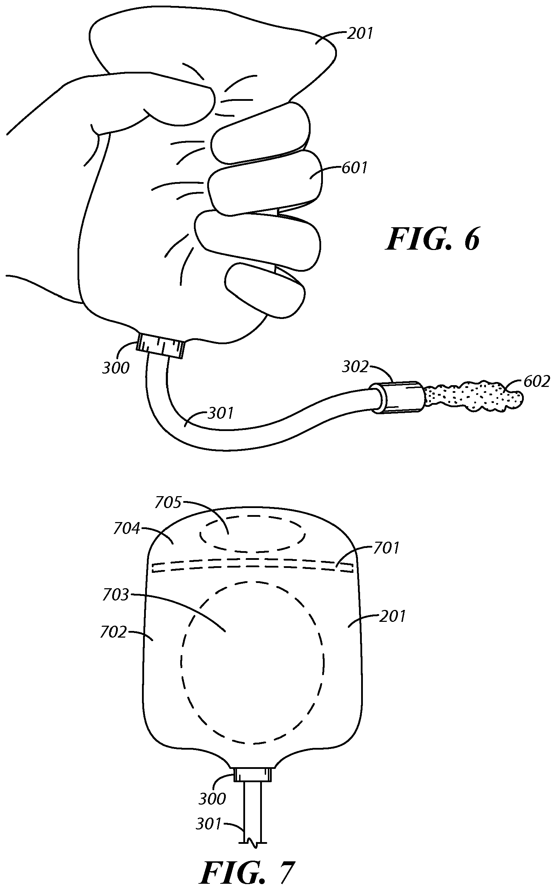

Referring to FIG. 6, such a package comprises a prepackaged, one-time-use, meal-appropriate, enteral food dispenser comprising a sealed package comprised, at least in substantial part, of flexible material that contains a bolus of squeezable food that is prepackaged within that sealed package. A dispensing port includes a direct feeding tube connector 302 that extends outwardly of the sealed package by no more than about ten centimeters. So configured, the sealed package can be readily grasped by a consumer's hand 601 (or the consumer's guardian, aide, or the like). When squeezed by that hand 601, the bolus of squeezable food 602 will exit the sealed package and enter a feeding tube (not shown in this view) via the dispensing port.

Per these teachings this enteral food dispenser holds no more than enough food than is appropriate to a single meal (and may contain less if desired). Squeezing the food to remove the food from the dispenser, in turn, anticipates and prompts a feeding behavior that is different than that contemplated and prompted by typical prior art practice in these regards. In particular, these teachings help to prompt a behavior that can encourage self-feeding (even by young consumers) using hand machinations that suggest or even mimic some ordinary food-consumption practices.

These teachings are highly flexible in practice and will accommodate a range of modifications. As but one example in these regards, and referring to FIG. 7, the container 201 can include an interior wall 701 (formed, for example, of thin plastic material) that forms a first interior chamber 702 that receives the aforementioned food bolus 703 and a second interior chamber 704 that receives, for example, a liquid such as water 705. So configured, the consumer can first dispense the food 703 and then, by applying pressure to thereby rupture the aforementioned interior wall 701, flush the feeding tube 401 with the liquid 705.

Those skilled in the art will recognize that a wide variety of modifications, alterations, and combinations can be made with respect to the above described embodiments without departing from the scope of the invention as defined by the appended claims, and that such modifications, alterations, and combinations are to be viewed as being within the ambit of the inventive concept.

## Claims

1. A prepackaged, one-time-use, meal-appropriate, enteral food dispenser (200) comprising:
a sealed package comprised, at least in substantial part, of flexible material; and
a bolus of squeezable food that is prepackaged within the sealed package;
wherein the prepackaged, one-time-use, meal-appropriate, enteral food dispenser (200) is
**characterized by**:
a dispensing port (300) comprising a flexible tube (301) with a direct feeding tube connector (302) that extends outwardly of the sealed package by no more than ten centimeters and is configured to connect directly and securely to an enteral feeding tube (401) administration port (402);
such that when the sealed package is squeezed, the bolus of squeezable food will exit the sealed package via the dispensing port (300) and flexible tube (301) and enter the enteral feeding tube (401) administration port (402) directly by the feeding tube connector (302).

2. The prepackaged, one-time-use, meal-appropriate, enteral food dispenser (200) of claim 1 wherein the sealed package lacks a hanging interface.

3. The prepackaged, one-time-use, meal-appropriate, enteral food dispenser (200) of any preceding claim wherein the dispensing port includes a flow limiter to limit a flow rate of the squeezable food from the sealed package.

4. The prepackaged, one-time-use, meal-appropriate, enteral food dispenser (200) of any of preceding claims 1 to 2 wherein the dispensing port includes a one-way valve disposed to prevent material from entering the sealed package via the dispensing port.

5. The prepackaged, one-time-use, meal-appropriate, enteral food dispenser (200) of any preceding claim wherein the direct feeding tube connector (302) includes at least one of the group comprising:
a threaded interface;
a friction-fit interface;
a snap-fit interface;
a hooks-and-loops interface;
a magnetic interface;
to compatibly engage with the enteral feeding tube (401) administration port.

6. The prepackaged, one-time-use, meal-appropriate, enteral food dispenser (200) of any preceding claim wherein the enteral food dispenser_includes at least two initially-separated compartments of pre-filled squeezable food, enteral feeding or formula with a consumable liquid.

7. The prepackaged, one-time-use, meal-appropriate, enteral food dispenser (200) of any preceding claim further comprising:
graphic content disposed on an exterior surface of the sealed package.

8. The prepackaged, one-time-use, meal-appropriate, enteral food dispenser (200) of claim 7 wherein the graphic content includes at least one of:
an illustration of at least one food item that comprises the squeezable food;
a textual description of the at least one food item.

9. A method comprising:
providing a container (201) that is sized no larger than a single meal, the container (201) being at least substantially comprised of readily-deformable material and having a dispensing port comprising a flexible tube (301) with a direct feeding tube connector (302) that extends outwardly of the sealed package by no more than ten centimeters and is configured to connect directly and securely to an enteral feeding tube (401) administration port (402);
filling the container (201) with a meal-appropriate bolus of squeezable food; and
hermetically sealing the container (201);
such that when squeezed, the meal-appropriate bolus of squeezable food will exit the sealed package via the dispensing port (300) and flexible tube (301) and enter the enteral feeding tube (401) administration port (402) directly by the feeding tube connector (302).

10. The method of claim 9 wherein the dispensing port (300) includes:
a flow limiter; and
a one-way valve.

11. The method of claim 9 or Claim 10 wherein the dispensing port includes a one-way valve, the method further comprising preventing material from entering the sealed package via the dispensing port through use of the one-way valve.

12. The method of any of preceding claims 9 to 11 further comprising providing at least two initially-separated compartments of pre-filled squeezable food, enteral feeding or formula with a consumable liquid.

## Patentansprüche

1. Vorverpackter einmal zu nutzender lebensmittelgeeigneter enteraler Nahrungsspender (200), umfassend:
eine versiegelte Verpackung, die wenigstens zum großen Teil aus flexiblem Material besteht; und
eine Portion quetschbarer Nahrung, die in der versiegelten Verpackung vorverpackt ist;
wobei der vorverpackte einmal zu nutzende lebensmittelgeeignete enterale Nahrungsspender (200) **gekennzeichnet ist durch**:
eine Spendeöffnung (300), die eine flexible Röhre (301) mit einem Direktzuführungsröhrenverbinder (302) umfasst, der sich nach außen aus der versiegelten Packung um nicht mehr als zehn Zentimeter erstreckt und konfiguriert ist, um direkt und sicher an einer enteralen Zuführröhren-(401)-Verabreichungsöffnung (402) angeschlossen zu werden;
so dass, wenn die versiegelte Verpackung gequetscht wird, die Portion quetschbarer Nahrung die versiegelte Verpackung über die Spendeöffnung (300) und die flexible Röhre (301) verlässt und in die enterale Zuführröhren-(401)-Verabreichungsöffnung (402) direkt **durch** den Zuführröhrenverbinder (302) eintritt.

2. Vorverpackter einmal zu nutzender lebensmittelgeeigneter enteraler Nahrungsspender (200) nach Anspruch 1, wobei die versiegelte Verpackung keine Hängeschnittstelle aufweist.

3. Vorverpackter einmal zu nutzender lebensmittelgeeigneter enteraler Nahrungsspender (200) nach einem der vorhergehenden Ansprüche, wobei die Spendeöffnung einen Flussbegrenzer enthält, um eine Flussrate der quetschbaren Nahrung aus der versiegelten Verpackung zu begrenzen.

4. Vorverpackter einmal zu nutzender lebensmittelgeeigneter enteraler Nahrungsspender (200) nach einem der vorhergehenden Ansprüche 1 bis 2, wobei die Spendeöffnung ein Einwegeventil enthält, das angeordnet ist, um zu verhindern, dass Material in die versiegelte Verpackung über die Spendeöffnung eintritt.

5. Vorverpackter einmal zu nutzender lebensmittelgeeigneter enteraler Nahrungsspender (200) nach einem der vorhergehenden Ansprüche, wobei der Direktzuführröhrenverbinder (302) wenigstens eines aus der folgenden Gruppe umfasst:
eine Gewindeschnittstelle;
eine Presspassungsschnittstelle;
eine Schnappschnittstelle;
eine Klettschnittstelle;
eine magnetische Schnittstelle;
um kompatibel mit der enteralen Zuführröhren-(401)-Verabreichungsöffnung zu koppeln.

6. Vorverpackter einmal zu nutzender lebensmittelgeeigneter enteraler Nahrungsspender (200) nach einem der vorhergehenden Ansprüche, wobei der enterale Nahrungsspender wenigstens zwei initial getrennte Abteilungen vorher eingefüllter quetschbarer Nahrung, Sondennahrung oder -zubereitung mit einer konsumierbaren Flüssigkeit enthält.

7. Vorverpackter einmal zu nutzender lebensmittelgeeigneter enteraler Nahrungsspender (200) nach einem der vorhergehenden Ansprüche weiterhin umfassend:
graphischen Inhalt, der an einer äußeren Oberfläche der versiegelten Verpackung angeordnet ist.

8. Vorverpackter einmal zu nutzender lebensmittelgeeigneter enteraler Nahrungsspender (200) nach Anspruch 7, wobei der graphische Inhalt wenigstens eines von folgendem enthält:
eine Veranschaulichung von wenigstens einem Nahrungsbestandteil, den die quetschbare Nahrung umfasst;
eine textliche Beschreibung des wenigstens einen Nahrungsbestandteils.

9. Verfahren, umfassend:
Bereitstellen eines Behälters (201), der nicht größer als eine einzelne Mahlzeit ist, wobei der Behälter (201) wenigstens großenteils aus einem ohne weiteres deformierbaren Material besteht und eine Spendeöffnung aufweist, die eine flexible Röhre (301) mit einem Direktzuführröhrenverbinder (302) umfasst, der sich nach außen aus der versiegelten Verpackung um nicht mehr als zehn Zentimeter erstreckt und konfiguriert ist, um direkt und sicher mit einer enteralen Zuführröhren-(401)-Verabreichungsöffnung (402) verbunden zu werden;
Befüllen des Behälters (201) mit einer mahlzeitgeeigneten Portion einer quetschbaren Nahrung; und
hermetisches Versiegeln des Behälters (201);
so dass, wenn er gequetscht wird, die mahlzeitgeeignete Portion quetschbarer Nahrung aus der versiegelten Verpackung über die Spendeöffnung (300) und die flexible Röhre (301) austritt und in die enterale Zuführröhren-(401)-Verabreichungsöffnung (402) direkt durch den Zuführröhrenverbinder (302) eintritt.

10. Verfahren nach Anspruch 9, wobei die Spendeöffnung (300) enthält:
einen Flussbegrenzer; und
ein Einwegeventil.

11. Verfahren nach Anspruch 9 oder Anspruch 10, wobei die Spendeöffnung ein Einwegeventil enthält, wobei das Verfahren weiterhin umfasst, Material daran zu hindern, dass es in die versiegelte Verpackung über die Spendeöffnung eintritt, indem das Einwegeventil genutzt wird.

12. Verfahren nach einem der vorhergehenden Ansprüche 9 bis 11, das weiterhin ein Bereitstellen von wenigstens zwei anfänglich getrennten Abteilungen mit vorher eingefüllter quetschbarer Nahrung, Sondennahrung oder -zubereitung mit einer konsumierbaren Flüssigkeit zur Verfügung stellt.

## Revendications

1. Distributeur d'alimentation entérale (200), approprié pour un repas, mono-usage, préemballé, comprenant :
un emballage scellé composé, au moins en partie substantielle, de matériau flexible ; et
un bolus d'alimentation compressible qui est préemballé dans l'emballage scellé ;
dans lequel le distributeur d'alimentation entérale (200), approprié pour un repas, mono-usage, préemballé est **caractérisé par** :
un orifice de distribution (300) comprenant un tube flexible (301) avec un connecteur de tube d'alimentation directe (302) qui s'étend vers l'extérieur de l'emballage scellé selon une valeur non supérieure à dix centimètres et est configuré pour se raccorder directement et en toute sécurité à un orifice d'administration (402) de tube d'alimentation entérale (401) ;
de sorte que lorsque l'emballage scellé est comprimé, le bolus d'alimentation compressible sort de l'emballage scellé via l'orifice de distribution (300) et le tube flexible (301) et pénètre dans l'orifice d'administration (402) de tube d'alimentation entérale (401) directement par le connecteur de tube d'alimentation (302).

2. Distributeur d'alimentation entérale (200), approprié pour un repas, mono-usage, préemballé selon la revendication 1, dans lequel l'emballage scellé ne dispose pas d'interface de suspension.

3. Distributeur d'alimentation entérale (200), approprié pour un repas, mono-usage, préemballé selon l'une quelconque des revendications précédentes, dans lequel l'orifice de distribution comprend un limiteur d'écoulement pour limiter un débit de l'alimentation compressible depuis l'emballage scellé.

4. Distributeur d'alimentation entérale (200), approprié pour un repas, mono-usage, préemballé selon l'une quelconque des revendications 1 à 2, dans lequel l'orifice de distribution comprend une valve à une voie disposée pour empêcher le matériau d'entrer dans l'emballage scellé via l'orifice de distribution.

5. Distributeur d'alimentation entérale (200), approprié pour un repas, mono-usage, préemballé selon l'une quelconque des revendications précédentes, dans lequel le connecteur de tube d'alimentation directe (302) comprend au moins l'un du groupe comprenant :
une interface filetée ;
une interface à ajustement par friction ;
une interface à ajustement par encliquetage ;
une interface à crochets et bouclettes ;
une interface magnétique ;
pour se mettre en prise de manière compatible avec l'orifice d'administration de tube d'alimentation entérale (401).

6. Distributeur d'alimentation entérale (200), approprié pour un repas, mono-usage, préemballé selon l'une quelconque des revendications précédentes, dans lequel le distributeur d'alimentation entérale comprend au moins deux compartiments initialement séparés d'alimentation compressible pré-remplie, d'alimentation entérale ou de formule avec un liquide consommable.

7. Distributeur d'alimentation entérale (200), approprié pour un repas, mono-usage, préemballé selon l'une quelconque des revendications précédentes, comprenant en outre :
un contenu graphique disposé sur une surface extérieure de l'emballage scellé.

8. Distributeur d'alimentation entérale (200), approprié pour un repas, mono-usage, préemballé selon la revendication 7, dans lequel le contenu graphique comprend au moins l'une parmi :
une illustration d'au moins un produit alimentaire qui comprend l'aliment compressible ;
une description textuelle du au moins un produit alimentaire.

9. Procédé comprenant les étapes suivantes :
prévoir un récipient (201) qui est dimensionné pour ne pas être supérieur à un seul repas, le récipient (201) étant au moins sensiblement composé d'un matériau facilement déformable et ayant un orifice de distribution comprenant un tube flexible (301) avec un connecteur de tube d'alimentation directe (302) qui s'étend vers l'extérieur de l'emballage scellé selon une valeur non supérieure à dix centimètres et est configuré pour se raccorder directement et en toute sécurité à un orifice d'administration (402) de tube d'alimentation entérale (401) ;
remplir le récipient (201) avec le bolus approprié pour un repas d'aliment compressible ; et
fermer hermétiquement le récipient (201) ;
de sorte que lorsqu'il est comprimé, le bolus approprié pour un repas d'alimentation compressible sort de l'emballage scellé via l'orifice de distribution (300) et le tube flexible (301) et pénètre dans l'orifice d'administration (402) de tube d'alimentation entérale (401) directement par le connecteur de tube d'alimentation (302).

10. Procédé selon la revendication 9, dans lequel l'orifice d'alimentation (300) comprend :
un limiteur d'écoulement ; et
une valve à une voie.

11. Procédé selon la revendication 9 ou la revendication 10, dans lequel l'orifice de distribution comprend une valve à une voie, le procédé comprenant en outre l'étape pour empêcher le matériau d'entrer dans l'emballage scellé via l'orifice de distribution par l'utilisation de la valve à une voie.

12. Procédé selon l'une quelconque des revendications 9 à 11, comprenant en outre l'étape pour prévoir au moins deux compartiments initialement séparés d'alimentation compressible pré-remplie, d'alimentation entérale ou de formule avec un liquide consommable.
